# EUROPÄISCHE PATENTSCHRIFT

(11) **EP 1 230 837 B1**
(45) Veröffentlichungstag und Bekanntmachung des Hinweises auf die Patenterteilung: **16.01.2008**
(21) Anmeldenummer: 02000998.1
(22) Anmeldetag: 17.01.2002
(51) Int. Cl.: A01F 15/08, A01F 15/07

(54) **Rundballenpresse**
Rotobaler
Presse à balles rondes

(30) Priorität: 09.02.2001 DE 10106013
(43) Veröffentlichungstag der Anmeldung: 14.08.2002
(73) Patentinhaber: DEERE & COMPANY, Moline, Illinois 61265-8098 (US)
(72) Erfinder: Viaud, Jean, 70100 Gray (FR)
(74) Vertreter: Magin, Ludwig Bernhard

(56) Entgegenhaltungen:
- GB-A- 2 152 873
- US-A- 3 974 632
- US-A- 4 841 851

## Beschreibung

Die Erfindung betrifft eine Rundballenpresse mit einem Gestell und einer an diesem vertikal schwenkbaren Klappe.

Bekannte Rundballenpressen, z. B. EP-B-651 939, bestehen aus einem auf Rädern getragenen Gestell, an dessen Rückseite eine vertikal schwenkbare Klappe angelenkt ist. In dem Gestell und der Klappe wird ein Ballenpreßraum gebildet, in dem ein Rundballen hergestellt werden kann. Sobald der Rundballen seine maximale Größe erreicht hat, wird die Klappe angehoben, so daß er auf den Boden entfallen kann. Die Klappe wird dabei soweit angehoben, daß die Rundballenpresse weitergefahren werden kann, ohne daß es zu einer Kollision zwischen der Klappe und dem Rundballen kommt.

Die US A 4 841 851 offenbart eine Rundballenpresse mit einer zweiteiligen Heckklappe zum Auswerfen eines gebildeten Ballens. Dabei ist ein oberer Teil nach oben und ein unterer Teil der Heckklappe nach unten schwenkbar, wozu jeweils ein Hydraulikmotor verwendet wird. Dieser Ausführung haftet der Nachteil an, daß beide Teile über ihren ganzen Weg verstellt werden müssen, bevor der Rundballen aus der Ballenkammer ausgeworfen werden kann; während dieser Zeit kann nicht weiter gepreßt werden. Da bei heutigen Arbeitsweisen die Unterbrechung zum Auswerfen des Rundballens sehr kurz sein soll, ist eine solche Lösung ungeeignet. Zudem läßt der untere Bereich es nicht zu, daß der Rundballen sofort auf den Boden fällt, so daß der obere Teil umso weiter angehoben werden muß.

Das der Erfindung zugrunde liegende Problem wird darin gesehen, daß die Zeitdauer zum ausreichenden Anheben der Klappe zu groß ist.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise kann der weitere Teil schneller und/oder aufgrund des reduzierten Gewichts mit geringerer Kraft angehoben werden. Die Wirkung der Erfindung beruht also darauf, daß primär der Teil der den Ballenpreßraum verschließenden Klappe verstellt wird, der dem Auswurf des Rundballens hinderlich ist. Bei der Rundballenpresse kann es sich um eine mit variabler und um eine mit fester Kammergröße handeln. Anstatt eines weiteren können auch mehrere weitere Teile vorgesehen sein, die wie Fächer übereinandergeschoben bzw. aneinander gereiht werden.

Eine Lagerung des weiteren Teils auf dem ersten Teil hat zum Vorteil, daß der erste und der weitere Teil als eine kompakte Einheit an dem Gestell montiert werden können.

Werden der oder die weiteren Teile an dem Gestell verstellbar gelagert, wird die Lagerstelle des ersten Teils entlastet. Außerdem können der oder die weiteren Teile derart gelagert werden, daß ihre Schwenkbewegungen optimal gestaltet werden kann.

Anstatt einer grundsätzlich möglichen getrennten Steuerung der Bewegung des ersten und des weiteren Teils mit den dadurch möglichen Freiheiten können die Bewegungen auch voneinander abhängig gestaltet werden, wodurch sich z. B. eine Verringerung von Stellelementen oder die Erreichung von Abhängigkeiten während der Verstellung erreichen läßt. Eine derartige Abhängigkeit kann sowohl mechanisch mittels Lenkern, Gestängen, Seilzügen, Gleitführungen oder dergleichen oder hydraulisch, z. B. mittels Master-Slave-Motoren erreicht werden.

Eine einfache und zuverlässige Art einer gemeinsamen, voneinander abhängigen und unterschiedlich starken Verstellung beider Teile kann dadurch erreicht werden, daß der erste Teil an den weiteren Teil anlegbar ist und die Abstände des Anlagepunktes zu den jeweiligen Schwenkachsen unterschiedlich sind. Auf diese Weise kann eine geringe Anhebung des ersten Teils eine verhältnismäßig starke Anhebung des weiteren Teils bewirken, so daß der Ballenpreßraum insgesamt sehr schnell freigegeben wird.

Die Anordnung mindestens vertikal, möglichst aber auch horizontal beabstandeter Lager an dem Gestell zur vertikal schwenkbaren Aufnahme des ersten und des weiteren Teils an dem Gestell stellt eine wirksame Übersetzung der Bewegung des ersten Teils beim Übergang auf die Bewegung des zweiten Teils dar.

Wenn eine Mitnehmeröse den Mitnehmer in sich aufnimmt, kann diese mit Schmiermittel versehen und abgekapselt werden, so daß kein Schmutz anhaftet.

Die Verwendung einer Rolle hat den Vorteil, daß eine bei der Relativbewegung der beiden Teile aufeinander entstehende radial gerichtete Relativbewegung möglichst reibungsfrei übertragen werden kann.

Eine alternative Anlage des Mitnehmers an dem weiteren Teil kann dadurch erreicht werden, daß der weitere Teil mit einem Schwenkarm oder dergleichen in der Art einer Schiene ausgebildet ist und auf dem Mitnehmer aufsitzt.

Der weitere Teil kann problemlos an dem ersten Teil vorbeigeschwenkt werden, wenn die an ihm vorgesehenen Komponenten zur Umfassung des Ballenpreßraums von den übrigen Komponenten unabhängig sind, wie dies z. B. bei Preßrollen der Fall ist, um die keine Riemen gewunden sind.

Wenn der Stellmotor zum Anheben der Klappe während des Auswurfvorgangs einenends an dem Mitnehmer angreift, kann dieser zweckmäßig als Lager verwendet werden, was einerseits Kosten spart, andererseits auch eine direkte Kräfteeinleitung an der Verbindungsstelle beider Teile besorgt.

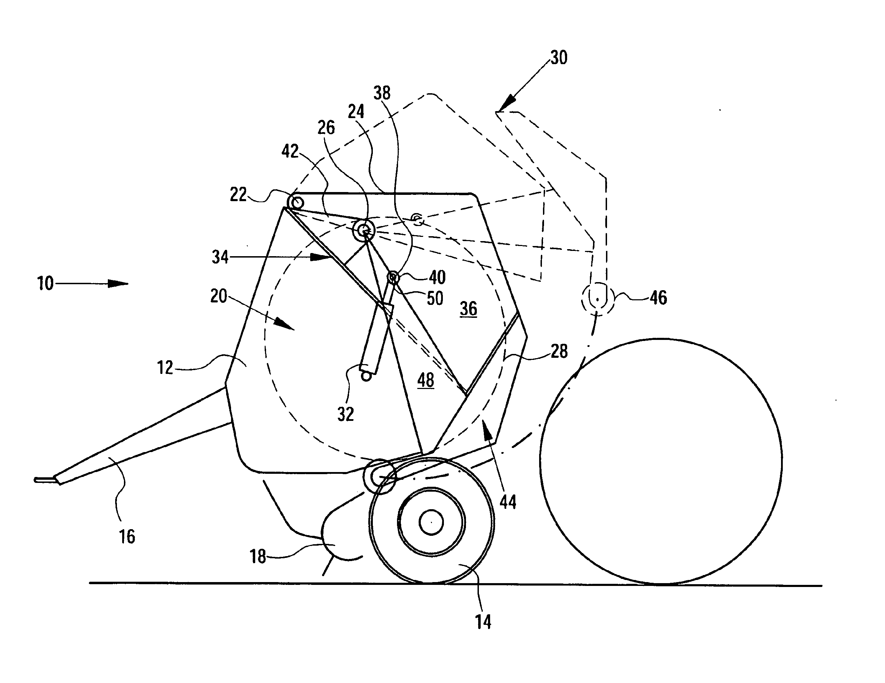

In der Zeichnung ist ein nachfolgend näher beschriebenes Ausführungsbeispiel der Erfindung dargestellt. Die einzige Figur der Zeichnung zeigt eine erfindungsgemäße Rundballenpresse mit einem Gestell und einem daran angebrachten ersten und weiteren Teil in einer Preßstellung und einer Auslaßstellung.

Die dargestellte Rundballenpresse 10 enthält ein Gestell 12, das sich mittels Rädern 14 auf dem Boden abstützt und mittels einer Deichsel 16 an ein nicht gezeigtes Zugfahrzeug, z. B. einen Ackerschlepper, anschließbar ist.

An der vorderen unteren Seite des Gestells 12 befindet sich in bekannter Weise eine Aufnahmevorrichtung 18 und in dem Gestell 12 wird der vordere Teil eines Ballenpreßraums 20 gebildet. An dem rückwärtigen oberen Eckbereich des Gestells 12 befindet sich ein erstes Lager 22 für einen ersten Teil 24 und darunter ein zweites Lager 26 für einen weiteren Teil 28 einer von beiden Teilen 24, 28 gebildeten Klappe 30. Zur im nachfolgenden näher beschriebenen Verstellung der Klappe 30 ist auf jeder Seite der Rundballenpresse 10 ein Stellmotor 32 vorgesehen.

Die Rundballenpresse 10 nach dieser Erfindung ist hinsichtlich ihrer Preßfunktion wie eine herkömmliche Rundballenpresse 10 mit größenunveränderlichem Ballenpreßraum 20 ausgebildet und enthält hierfür eine Vielzahl zueinander parallel verlaufender Preßkomponenten, wie Preßrollen, deren Rotationsachsen auf einem Kreisbogen gelegen sind und von denen wenigstens einige angetrieben sind. Alternativ kann die Rundballenpresse 10 auch als solche mit einem größenveränderlichen Ballenpreßraum ausgebildet werden. Auf die Ausbildung der Rundballenpresse 10 wird daher nur eingegangen, soweit es die Erfindung betrifft.

Das Gestell 12 schließt an seiner Rückseite im wesentlichen mit einer geringfügig nach vorne geneigt verlaufenden Kante 34 ab, an der der erste Teil 24 der Klappe 30 während des Preßvorgangs anliegt und gehalten wird. In einem nicht gezeigten Ausführungsbeispiel könnte die Kante 34 auch senkrecht oder nach hinten geneigt verlaufen. Diese Kante 34 schneidet den Ballenpreßraum 20 im wesentlichen mittig.

Das erste Lager 22 befindet sich in unmittelbarer Nähe der Kante 34 an deren oberen Ende, wie dies von herkömmlichen Rundballenpressen bekannt ist. Das erste Lager 22 kann aus Lagerhälften, Büchsen oder dergleichen gebildet sein, in denen eine Welle, ein Rohr oder dergleichen schwenkbar aufgenommen wird, die bzw. das mit dem ersten Teil 24 verbunden ist. Auf der von dem Betrachter nicht einsehbaren Seite der Rundballenpresse 10 ist ein weiteres erstes Lager 22 analog vorgesehen.

Der erste Teil 24 entspricht im wesentlichen dem oberen Teil einer herkömmlichen Klappe und ist in seinem Innern mit Komponenten versehen, z. B. Preßrollen und/oder Riemen und/oder Ketten, die den Ballenpreßraum 20 z. T. umgeben. Der erste Teil 24 erstreckt sich umfangsseitig über ca. die Hälfte des Ballenpreßraums 20 in der Klappe 30 und weist Seitenwände 36 auf. Auf der dem Betrachter zugelegenen Seitenwand 36 befindet sich ein Mitnehmer 38, der in der Form eines Zapfens, Bolzens oder dergleichen ausgeführt ist und sich seitlich erstreckt. In diesem speziellen Ausführungsbeispiel nimmt der Mitnehmer 38 eine Rolle 40 drehbar auf - dies ist jedoch nicht erforderlich. Die Rolle 40 kann z. B. mittels eines nicht gezeigten Rollen- oder Gleitlagers auf dem Mitnehmer 38 aufgenommen werden. Der Mitnehmer 38 befindet sich mit Abstand zu dem ersten Lager 22 an der Seitenwand 36 und unterhalb des zweiten Lagers 26.

Das zweite Lager 26 befindet sich merklich hinter der Kante 34 und ist mittels einer in diesem Fall dreieckförmigen Konsole 42 an dem Gestell 12 angebracht. Ein zweites Lager 26 und eine zweite Konsole 42 sind auf der anderen Seite der Rundballenpresse 10 vorgesehen. Das zweite Lager 26 kann wie das erste Lager 22 ausgebildet sein.

Der weitere Teil 28 ergänzt den ersten Teil 24 zu einer kompletten Klappe 30, die den Ballenpreßraum 20 in dem nicht von dem Gestell 12 umgebenen Bereich umgibt. Der weitere Teil 28 ist kleiner ausgebildet als der erste Teil 24 und stellt ca. die andere Hälfte der Klappe 30 dar. Der weitere Teil 28 befindet sich unterhalb des ersten Teils 24 und ragt unter das Gestell 12 und in diesem Ausführungsbeispiel bis zu der Aufnahmevorrichtung 18. Der weitere Teil 28 enthält einen Umfangsbereich 44, der im wesentlichen von den Preßkomponenten 46 gebildet wird, und seitliche Arme 48, die am rückwärtigen Ende mit dem Umfangsbereich 44 fest verbunden sind und am vorderen Ende vertikal schwenkbar an dem zweiten Lager 26 angreifen. In der Zeichung ist nur eine Preßkomponente 46 dargestellt. Die Lage des zweiten Lagers 26 ist so gewählt, daß der weitere Teil 28 an der Rückseite des ersten Teils 24 vertikal vorbeigeschwenkt werden kann. Die seitlichen Arme 48 des weiteren Teils 28 enthalten Mitnehmerösen 50, in denen jeweils eine Rolle 40 mit Spiel aufgenommen wird. Legt man eine Gerade durch beide Lager 22, 26, dann befindet sich der Mitnehmer 38 in beiden Endstellungen des ersten Teils 24 ungefährt weit von der Geraden weg, so daß das Spiel der Rolle 40 in der Mitnehmeröse 38 gering gehalten werden kann. Wenn auch auf die Rollen 40 verzichtet werden kann, so ist ein Spiel doch vorhanden.

Es ist ersichtlich, daß sich mit Blick auf die Zeichnung der Mitnehmer 38 rückwärtig des zweiten Lagers 26 und im Bereich der Arme 48 befindet. Folglich ist der Abstand zwischen dem Mitnehmer 38 und dem zweiten Lager 26 wesentlich geringer als der Abstand des Mitnehmers 38 zu dem ersten Lager 22. Eine Bewegung des ersten Teils 24 um das erste Lager 22 bewirkt aufgrund der Anlage des Mitnehmer 38 bzw. der auf ihm aufgenommenen Rolle 40 in der Mitnehmeröse 50 eine übersetzte Bewegung des weiteren Teils 28 um das zweite Lager 26. Demgemäß bewirkt eine geringe vertikale Schwenkbewegung des ersten Teils 24 eine große Schwenkbewegung des weiteren Teils 28.

Der Stellmotor 32 zum Öffnen des Ballenpreßraums 20 greift einerseits an einem nicht gezeigten Lager auf dem Gestell 12 und andererseits an dem Mitnehmer 38 an, was vorteilhaft, aber nicht zwingend ist.

In der Zeichnung sind der erste und der weitere Teil 24 und 28 in der Preßstellung in durchgezogenen Linien und in der Auswurfstellung in unterbrochenen Linien dargestellt.

## Patentansprüche

1. Rundballenpresse (10) mit einem Gestell (12) und einer an diesem vertikal schwenkbaren Klappe (30), **dadurch gekennzeichnet, daß** die Klappe (30) aus einem ersten Teil (24) und wenigstens einem weiteren Teil (28) besteht, die zum Entladen eines Rundballens getrennt voneinander gleichsinnig nach oben bewegbar sind.

2. Rundballenpresse nach Anspruch 1, **dadurch gekennzeichnet, daß** der weitere Teil (28) auf dem ersten Teil (24) beweglich gelagert ist.

3. Rundballenpresse nach Anspruch 1, **dadurch gekennzeichnet, daß** der weitere Teil (28) auf dem Gestell (12) beweglich gelagert ist.

4. Rundballenpresse nach Anspruch 3, **dadurch gekennzeichnet, daß** der erste Teil (24) infolge seiner Verstellung auf den weiteren Teil (28) wirkt und diesen verstellt.

5. Rundballenpresse nach Anspruch 4, **dadurch gekennzeichnet, daß** Lager (22, 26) des ersten und des weiteren Teils (24 und 28) einen radialen Abstand zueinander aufweisen und der erste Teil (24) an dem weiteren Teil (28) während der Bewegung anliegt.

6. Rundballenpresse nach einem oder mehreren der vorherigen Ansprüche, **dadurch gekennzeichnet, daß** der freie Endbereich des weiteren Teils (28) im angehobenen Zustand einen Abstand zu dem Gestell (12) und dem Boden aufweist, der dem maximalen Durchmesser eines in einem Ballenpreßraum (20) gefertigten Rundballens entspricht.

7. Rundballenpresse nach einem oder mehreren der vorherigen Ansprüche, **gekennzeichnet durch** ein Lager (22) im oberen, dem Gestell (12) zugelegenen Eckbereich des ersten Teils (24) zur Verbindung mit dem Gestell (12) und **durch** ein darunter und vorzugsweise von dem Gestell (12) beabstandetes Lager (26) an dem Gestell (12) zur vertikal schwenkbaren Aufnahme des weiteren Teils (28).

8. Rundballenpresse nach einem oder mehreren der vorherigen Ansprüche 3 bis 7, **dadurch gekennzeichnet, daß** der erste Teil (24) einen zapfenartigen Mitnehmer (38) und der weitere Teil (28) eine den Mitnehmer (38) aufnehmende Mitnehmeröse (50) aufweist.

9. Rundballenpresse nach einem oder mehreren der vorherigen Ansprüche, **dadurch gekennzeichnet, daß** auf dem Mitnehmer (38) eine Rolle (40) drehbar aufgenommen ist.

10. Rundballenpresse nach einem oder mehreren der vorherigen Ansprüche, **dadurch gekennzeichnet, daß** der Mitnehmer (38) gegebenenfalls mit der Rolle (40) an einer Schiene an dem weiteren Teil (28) anliegt.

11. Rundballenpresse nach einem oder mehreren der vorherigen Ansprüche, **dadurch gekennzeichnet, daß** der weitere Teil (28) mit einer oder mehreren rollenartigen Preßkomponenten (46) zum Umschließen eines Ballenpreßraums (20) versehen ist.

12. Rundballenpresse nach einem oder mehreren der vorherigen Ansprüche, **dadurch gekennzeichnet, daß** ein Stellmotor (32) zur Verstellung des ersten Teils (24) einerseits an dem Gestell (12) und andererseits an dem Mitnehmer (38) angreift.

## Claims

1. Round baler (10) having a frame (12) and a hinged cover (30) which is vertically pivotable thereon, **characterized in that** the hinged cover (30) consists of a first part (24) and at least one further part (28), which parts, for the discharging of a round bale, can be moved separately from one another upwards in the same direction.

2. Round baler according to Claim 1, **characterized in that** the further part (28) is movably journalled on the first part (24).

3. Round baler according to Claim 1, **characterized in that** the further part (28) is movably journalled on the frame (12).

4. Round baler according to Claim 3, **characterized in that** the first part (24), as a result of its shifting, acts upon the further part (28) and shifts the latter.

5. Round baler according to Claim 4, **characterized in that** bearings (22, 26) of the first and of the further part (24 and 28) have a radial distance apart and the first part (24), during the movement, bears against the further part (28).

6. Round baler according to one or more of the previous claims, **characterized in that** the free end region of the further part (28), in the elevated state, has a distance to the frame (12) and to the ground corresponding to the maximum diameter of a round bale produced in a bale pressing chamber (20).

7. Round baler according to one or more of the previous claims, **characterized by** a bearing (22) in the upper corner region of the first part (24) facing the frame (12) for connection to the frame (12), and by a lower-situated bearing (26) attached to the frame (12), yet preferably distanced from the frame (12), for the vertically pivotable reception of the further part (28).

8. Round baler according to one or more of the previous claims 3 to 7, **characterized in that** the first part (24) has a pin-like driver (38) and the further part (28) has a driver eyelet (50) which receives the driver (38).

9. Round baler according to one or more of the previous claims, **characterized in that** a roller (40) is rotatably accommodated on the driver (38).

10. Round baler according to one or more of the previous claims, **characterized in that** the driver (38), where appropriate, bears with the roller (40) against a rail on the further part (28).

11. Round baler according to one or more of the previous claims, **characterized in that** the further part (28) is provided with one or more roller-like pressing components (46) for the enclosure of a bale pressing chamber (20).

12. Round baler according to one or more of the previous claims, **characterized in that** a servo motor (32) for the shifting of the first part (24) acts, on the one hand, upon the frame (12) and, on the other hand, upon the driver (38).

## Revendications

1. Presse à balles rondes (10) comportant un bâti (12) et une trappe (30) apte à pivoter verticalement sur ce dernier, **caractérisée en ce que** la trappe (30) est formée par une première partie (24) et au moins une partie supplémentaire (28), qui sont aptes à se déplacer dans le même sens vers le haut séparément l'une de l'autre en vue de décharger une balle ronde.

2. Presse à balles rondes selon la revendication 1, **caractérisée en ce que** la partie supplémentaire (28) est montée mobile contre la première partie (24).

3. Presse à balles rondes selon la revendication 1, **caractérisée en ce que** la partie supplémentaire (28) est montée mobile sur le bâti (12).

4. Presse à balles rondes selon la revendication 3, **caractérisée en ce que** la première partie (24), sous l'effet de son déplacement, agit sur la partie supplémentaire (28) et déplace celle-ci.

5. Presse à balles rondes selon la revendication 4, **caractérisée en ce que** des paliers (22, 26) de la première partie et de la partie supplémentaire (24 et 28) sont situés à une distance radiale l'un de l'autre et la première partie (24) est en appui contre la partie supplémentaire (28) au cours du déplacement.

6. Presse à balles rondes selon une ou plusieurs des revendications précédentes, **caractérisée en ce que** la zone d'extrémité libre de la partie supplémentaire (28) est située, dans la position haute, à distance du bâti (12) et du fond, qui correspond au diamètre maximal d'une balle ronde formée dans la chambre de formage des balles (20).

7. Presse à balles rondes selon une ou plusieurs des revendications précédentes, **caractérisée par** un palier (22) dans la zone d'angle supérieure, orientée vers le bâti (12), de la première partie (24) pour l'assemblage avec le bâti (12) et par un palier (26), situé en dessous et, de préférence, à distance du bâti (12) pour recevoir la partie supplémentaire (28) de manière à pouvoir pivoter verticalement sur le bâti (12).

8. Presse à balles rondes selon une ou plusieurs des revendications précédentes 3 à 7, **caractérisée en ce que** la première partie (24) comporte un entraîneur (38) en forme de goupille et la partie supplémentaire (28) comporte un anneau (50) recevant l'entraîneur (38).

9. Presse à balles rondes selon une ou plusieurs des revendications précédentes, **caractérisée en ce qu'**un rouleau (40) est logé rotatif sur l'entraîneur (38).

10. Presse à balles rondes selon une ou plusieurs des revendications précédentes, **caractérisée en ce que** l'entraîneur (38), le cas échéant avec le rouleau (40), est en appui contre un rail sur la partie supplémentaire (28).

11. Presse à balles rondes selon une ou plusieurs des revendications précédentes, **caractérisée en ce que** la partie supplémentaire (28) est munie d'un ou de plusieurs composants de compactage (46) en forme de rouleaux, destinés à délimiter une chambre de formage des balles (20).

12. Presse à balles rondes selon une ou plusieurs des revendications précédentes, **caractérisée en ce qu'**un servomoteur (32), pour le déplacement de la première partie (24), entre en contact contre le bâti (12) d'une part, et contre l'entraîneur (38) d'autre part.
